(19) Europäisches Patentamt
European Patent Office
Office européen des brevets

(11) EP 0 471 258 B1

(12) EUROPÄISCHE PATENTSCHRIFT

(45) Veröffentlichungstag und Bekanntmachung des Hinweises auf die Patenterteilung:
**16.10.1996 Patentblatt 1996/42**

(51) Int Cl.[6]: **C08F 2/06**

(21) Anmeldenummer: **91113088.8**

(22) Anmeldetag: **03.08.1991**

(54) **Verfahren zur Herstellung von Homooligomeren und Cooligomeren**

Process for preparing homooligomers and cooligomers

Procédé de préparation d'homo-oligomères et co-oligomères

(84) Benannte Vertragsstaaten:
**AT BE CH DE DK ES FR GB IT LI NL SE**

(30) Priorität: **11.08.1990 DE 4025493**

(43) Veröffentlichungstag der Anmeldung:
**19.02.1992 Patentblatt 1992/08**

(73) Patentinhaber: **Röhm GmbH**
**64293 Darmstadt (DE)**

(72) Erfinder:
- **Beyer, Claudia, Dr.**
  **W-6101 Bickenbach (DE)**
- **Pennewiss, Horst, Dr.**
  **W-6100 Darmstadt (DE)**

(56) Entgegenhaltungen:
**EP-A- 0 054 139**
**FR-A- 2 152 936**
**US-A- 4 526 950**

Bemerkungen:
Die Akte enthält technische Angaben, die nach dem Eingang der Anmeldung eingereicht wurden und die nicht in dieser Patentschrift enthalten sind.

EP 0 471 258 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung von Homo- und Cooligomeren, insbesondere von Cooligomeren von (Meth)acrylsäureestern und α-Olefinen, die als Syntheseöle bzw. Bestandteile von solchen, als Mineralöl-Additive sowie als Weichmacher und anderes mehr Verwendung finden können.

Stand der Technik

Als Oligomere werden im allgemeinen Verbindungen mit MG $10^2$ - $10^5$, insbesondere $10^2$ - $10^4$ verstanden, die aus entsprechenden Monomereinheiten aufgebaut sind. (Vgl. Römpp's Chemie-Lexikon, 8. Auflage s. 2893, Franckh'sche Verlagsbuchh. 1985) Beispielhaft für den für die vorliegende Erfindung maßgeblichen Stand der Technik sind Cooligomere aus (Meth)acrylsäureestern und α-Olefinen. Oligomere von Acrylsäureestern im heutigen Sinne sind z.B. in der Arbeit C.E. Rehberg et al. in Ind. Eng. Chem. 44 (12) 2864,1952) beschrieben.

In der US-A 3 968 148 bzw. der DE-A 22 43 064 werden z.B. Oligomere dieses Typs beschrieben, die aus drei Monomergruppen aufgebaut sind. Beansprucht werden Oligomere aus:

| | |
|---|---|
| ca. 10 - 90 Gew.-% | eines 1-Alkens mit 4 bis 32 C-Atomen |
| ca. 1 - 35 Gew.-% | eines oder mehrerer Alkyl(meth)-acrylsäureester mit 8 - 34 C-Atomen im Alkylrest und |
| ca. 1 - 35 Gew.-% | eines oder mehrerer Alkylester der (Meth)acrylsäure oder homologer, endständig ungesättigter Carbonsäuren mit 1 - 4 C-Atomen im Alkylrest. |

Das Molekulargewicht derartiger Oligomerer liegt vorzugsweise bei $M_n$ = 1 000 bis 4 000. Betont wird der erreichte enge Molekulargewichtsbereich und die hohe Einheitlichkeit der Produkte.
Weiter wird in der US-A 4 009 195 ein Oligomerisierungsverfahren beschrieben, bei dem die verschiedensten (Meth) acrylsäurederivate, wie z.B. C1-C4-Alkylester in Anteilen von 1 - 35 Gew.-% neben (Meth)acrylsäureestern von C8-C34-Alkanolen in Anteilen von 1 - 45 Gew.-% kontinuierlich und gleichzeitig zu einem Gemisch von Radikal-Initiatoren und 10 - 90 Gew.-% eines 1-Alkens mit 4 - 32 C-Atomen derart zugesetzt werden, daß das im wesentlichen sofort eintretende molare Verhältnis Säure-Derivate zu 1-Alken im Reaktionsansatz relativ konstant im Bereich 0,001 zu 0,2 gehalten wird, wobei der Zusatz bei einer Temperatur erfolgen soll, welche die Oligomerisation nicht beeinträchtigt. Die Ausbeuten werden mit 40 bis 70 % angegeben, wobei insbesondere das α-Olefin zurückbleibt.

Weiter werden in der DE-A 32 23 694 Copolymere aus α-β-ungesättigten Dicarbonsäureestern mit α-Olefinen beansprucht. Die α-β-ungesättigten Dicarbonsäureester enthalten dabei definitionsgemäß als Alkoholkomponente geradkettige oder verzweigte Monoalkohole mit 3 - 10 Kohlenstoffatomen; die α-Olefine weisen 10 - 16 Kohlenstoffatome auf. Die Copolymeren können gegebenenfalls vernetzt sein und ihr Pour-point soll zwischen -60 und 0 Grad C liegen.

In der US-A 4 526 950 wird ein Herstellungsverfahren für Copolymere beschrieben, bei dem ausgehend von mindestens einem α-Olefin mit mindestens 6 C-Atomen und mindestens einer ungesättigten Carbonsäure bzw. Derivaten, die mit den Olefinen copolymerisierbar sind, in Gegenwart eines Radikal-Initiators die Mischung aus den Komponenten in Abwesenheit von Lösungs- oder Verdünnungsmitteln auf mindestens 135°C erhitzt wird, wobei keines der reaktiven Monomeren im Überschuß zur Anwendung kommt, um eine Verdünnungswirkung zu vermeiden. Weiter werden in der SU-A 1 135 752 Copolymerisate aus Decylmethacrylat und Tetradecen mit einem Molgewicht von 8 000 - 13 000 als Schmierölverdicker beansprucht.

Aus der EP-A 217 602 sind Öladditive auf Basis von Ethylencopolymerisaten u.a. mit ethylenisch ungesättigten Mono- oder Dicarbonsäuren bzw. deren Estern bekannt, die ein Molgewicht $M_n$ von < 1 000 besitzen.

Aufgabe und Lösung

Ein Weg zur Erniedrigung des Molekulargewichts bei radikalischer Polymerisation von Monomeren führt über die Anwendung von Reglern, insbesondere Merkaptanen. (Vgl. G.Henrici-Olivé et al. Fortschr. Hochpolym. Forsch. Bd. 2., S. 496 - 577 (1961); Houben-Weyl, Methoden der Organ. Chemie, 4. Auflage, Bd. XIV/I).

Als weitere geeignete Maßnahme findet sich in der Literatur die Überdosierung der Katalysatoren. Jedoch ist dies gleichbedeutend mit erhöhten Verfahrenskosten. Weiter liegen Untersuchungen zur Bildung von Oligomeren des Methylmeth-acrylats beim Erhitzen in der Flüssigkeitsphase oberhalb 160°C bei Anwesenheit eines Inhibitors vor. Tendenzmäßig wirken sich erhöhte Temperatur, erhöhter Druck und längere Reaktionszeiten zugunsten der Bildung höherer Oligomerer aus.
(Houben-Weyl, 4. Auflage, Bd. XIV/1, S. 1046, 1072 - 1073, Georg-Thieme-Verlag 1961).
Andererseits mußte für ein technisches Verfahren, das zudem auf der exotherm verlaufenden radikalischen Polymerisation beruht, gelten, daß von allzu drastischen Verfahrensbedingungen Abstand genommen werden sollte. Greift man wiederum paradigmatisch das Gebiet der Herstellung von Oligomeren oder Cooligomeren aus (Meth)acrylsäureestern und α-Olefinen als Stand der Technik heraus, so muß der Mangel an allgemein anwendbaren Verfahrensregeln, die einen gleichbleibend guten Erfolg gewährleisten, auffallen. Auch im Einzelfall konnten die dargestellten Verfahren nicht völlig befriedigen. Bei der Herstellung von (Meth)acrylat-Oligomeren sind für den Stand der Technik kennzeichnend:

- Die verwendeten Apparaturen, speziell für die anionische Polymerisation sind zwangsläufig aufwendig, da unter Inertbedingungen gearbeitet wird; man benötigt relativ reine Monomere; Verwendung eines Lösungsmittels gehört zum Standardverfahren.
- Die Anwendung von Reglern bei radikalischen Reaktionen führt zu den notorischen Problemen mit dem Einbau von Regler-Endgruppen, wie von den Mercaptanen bekannt.
- Desweiteren wird mit hohen Konzentrationen an Initiator gearbeitet. Abgesehen von den beträchtlichen Kosten, bedeutet dies auch ein vermehrtes Sicherheitsrisiko.

Es wurde nun gefunden, daß das Verfahren der vorliegenden Erfindung einen wesentlich verbesserten Zugang zu Cooligomeren insbesondere solchen von (Meth)acrylsäureestern und α-Olefinen eröffnet.

Die vorliegende Erfindung betrifft ein Verfahren mittels dessen (Meth)Acrylate homo- oder mit weiteren Monomeren copolymerisiert werden können, wobei die Molekulargewichte über einen weiten Bereich, der den gesamten Oligomerenbereich abdeckt und auch darüber hinaus geht, gesteuert werden können. Dabei wird keinerlei Regler verwendet. Die eingesetzte Initiatormenge liegt im Regelfall ebenfalls nicht über der für Lösungspolymerisationen üblichen Menge. Vor allem erfolgt die Molekulargewichtssteuerung zu niedrigen Molekulargewichten hin nicht wie im Stand der Technik beschrieben <u>vornehmlich</u> über die Variation der Initiatormenge.

Die beschriebenen Systeme bestehen aus einer Komponente B) mit hoher Polymerisationstendenz (wie z.B. (Meth)Acrylate) sowie einer Komponente A) mit niedriger Polymerisationstendenz und/oder einem geeigneten Lösungsmittel L.

Die Molekulargewichtsregelung erfolgt - bis hin zu den niedermolekularen Oligomeren, inclusive Dimere/Trimere - über die folgenden Einflußgrößen:

α) Das Verhältnis von B) zu A) bzw. zu A) plus L bzw. zu L allein. Unter sonst gleichen Bedingungen erhält man bei größerem Anteil A) und/oder L bzw. A) allein niedrigere Molekulargewichte.

β) Die Zulaufzeit für B), wobei unter sonst gleichen Bedingungen bei Verlängerung der Zulaufzeit niedrigere Molekulargewichte erhalten werden.

γ) Die Reaktionstemperatur, die so gewählt wird, daß sie in einem Bereich liegt, in dem ein herkömmlich hergestelltes reglerfreies Homopolymer der besser polymerisierenden Komponente B) bereits merklich depolymerisiert. Damit ist gemeint, daß bei der gewählten Temperatur im Monomer-Polymer-Gleichgewicht bereits größere Anteile an Monomer, in der Regel 3 - 80 Gew.-%, insbesondere 10 bis 60 Gew.-% Monomere vorliegen. So ist, um ein Beispiel zu nennen, je nach angestrebtem Molekulargewichtsbereich für n-Decylmethacrylat der Temperaturbereich von 120°C bis 170°C geeignet, wo zwischen 3 % und 80 Gew.-% Monomere im Gleichgewicht vorliegen. Ganz besonders geeignet für Molekulargewichte $\overline{M}w$ im niederen Molekulargewichtsbereich bei gleichzeitig hoher Ausbeute ist eine Temperatur bei der zwischen 15 % und 50 % Monomere vorliegen (hier 140 - 160°C). Durch diesen Effekt der Reaktionstemperatur kann die Ausbildung langer B)-Sequenzen je nach gewählter Temperatur mehr oder weniger eingedämmt werden, was zusätzlich zu α) und β) eine sehr wirksame Molekulargewichtssteuerung ermöglicht. Das Senken der Reaktionstemperatur im beschriebenen Bereich bewirkt demzufolge einen Anstieg der (Co)oligomer-Molekulargewichte.

Durch Variation von α), β) und γ) sind Molekulargewichte von ca. 500 - 100 000 reglerfrei in einfacher Weise und reproduzierbar einstellbar, wobei durch geschickte Wahl der Parameter, zu denen noch die Gesamtreaktionszeit hinzu kommt, auch leicht der vollständige Umsatz der Monomere erreicht werden kann. So kann z.B. als zusätzlicher Vorteil des erfindungsgemäßen Verfahrens die Abtrennung von Restmonomeren entfallen (siehe Beispiele). Wird die Rezeptur so eingestellt, daß außer A) kein weiteres "Lösungsmittel" verwendet wird und A) vollständig umgesetzt wird, was leicht möglich ist (siehe Beispiele) erübrigt sich sogar jede weitere Aufarbeitung des Ansatzes.

Wird bei Rezepturen mit inertem Lösungsmittel ein Lösungmittel L gewählt, das im Produkt verbleiben kann, wie z.B. PAO oder Mineralöl für eine Anwendung des Oligomeren als synth. Grundölbestandteil, oder dient vorher hergestelltes Oligomer als Lösungsmittel zur Herstellung von weiterem Oligomer, so kann die Abtrennung des Lösungsmittels ebenfalls entfallen (Beispiele 10 und 13).

Die vorliegende Erfindung betrifft somit ein Verfahren zur Herstellung von Oligomeren und Cooligomeren durch radikalische Polymerisation von mindestens einer Monomerkomponente B) mit höherer Polymerisationstendenz und 0 - 90 Gew.-%, vorzugsweise 1 - 50 (bezogen auf die Oligomeren) einer Monomerkomponente A) mit niederer Polymerisationstendenz bei erhöhter Temperatur und in Anwesenheit von Polymerisationsinitiatoren in einem üblichen Polymerisationsgefäß, mit der Maßgabe, daß die Q-Werte (nach Alfrey-Price) der Monomeren A) mit niederer Polymerisations tendenz und der Monomeren B) mit höherer Polymerisations tendenz um einen Faktor ≥ 5, verschieden sind wobei man :

a) in dem Polymerisationsgefäß eine flüssige Phase aus der Monomerkomponente A) oder einem Lösungsmittel L oder beiden vorlegt und diese auf die Reaktionstemperatur bringt

b) die Komponente B) mit höherer Polymerisationstendenz zugibt, sofern die Komponente A) vorliegt, in der Weise, daß das Molverhältnis der Komponente B) zur Komponente A) in der Anfangsphase der Polymerisation Werte von 0 bis ca. 0,2 durchläuft und in der Endphase der Polymerisation den Wert 0,2 bis 20 annimmt mit der Maßgabe, daß

c) die Reaktionstemperatur so gewählt wird, daß Sie in einem Bereich liegt, in dem ein (reglerfrei hergestelltes) Homopolymer aus der besser polymerisierenden Monomerkomponente B) bereits signifikant depolymerisiert. Zur Bemessung einer "signifikanten Depolymerisation" sei angegeben, daß unter diesen Temperaturbedingungen im Monomer-Polymer-Gleichgewicht bereits größere Anteile an Monomeren, in der Regel 3 - 80 Gew.-%, insbesondere 10 - 60 Gew.-%, speziell 15 bis 50 Gew.-% (bezogen auf die Summe aus Monomeren plus Polymer) vorhanden sind,

d) der Initiator I über die gesamte Polymerisationsdauer hinweg zugeführt wird, wobei der Initiator I so gewählt wird, daß die Halbwertszeiten bei der entsprechenden Reaktionstemperatur 1 Minute bis ca. 5 Stunden betragen und die Initiatormenge 0,1 bis 10, vorzugsweise 1 - 5 Gew.-% bezogen auf die Gesamtheit der Monomeren betragen.

In der Regel verfügt der Fachmann über ausreichende Erfahrung gestützt auf Literaturdaten (z.B. $\frac{\text{K Wachstum}}{\text{K Abbruch}}$) um eine Unterscheidung von Monomeren mit hoher radikalischer Polymerisationstendenz B) und solcher mit niederer Polymerisationstendenz (Monomerer A) treffen zu können. Eine Möglichkeit zur Abschätzung der jeweiligen Polymerisationstendenz ist u.a. anhand von weit auseinanderliegenden Q-Werten (nach Alfrey-Price, vgl. Brandrup-Immergut Polymer Handbook loc.cit. II/267) der Monomeren gegeben. Im allgemeinen kann angenommen werden, daß Monomere mit hoher bzw. niederer Polymerisationstendenz vorliegen, wenn die beiden numerischen Werte von Q um einen Faktor ≥ 5 voneinander verschieden sind. So hat z.B. 1-Hexen als Monomerkomponente A) einen Q-Wert von 0,035, Butylmethacrylat beispielsweise den Q-Wert von 0,82.

Vorzugsweise besteht die erfindungsgemäß zu 0 - 90 Gew.-% einzusetzende Monomerkomponente A) aus mindestens einem radikalisch polymerisierbaren α-Olefin, mit 4 - 40 Kohlenstoffatomen, wobei A) gewöhnlich 5 - 90 Gew.-% der Cooligomeren-Zusammensetzung von CM ausmacht und der Rest auf B) entfällt (= Cooligomere CM').

Die Komponente B) besteht vorzugsweise aus mindestens einem Acryl- bzw. Methacrylsäureester der Formel (I)

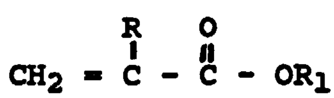

(I)

worin R für Wasserstoff oder Methyl und $R_1$ für einen gegebenenfalls verzweigten, gegebenenfalls cyclischen Alkylrest mit 1 - 42 Kohlenstoffatomen steht, wobei einzelne Kettenglieder durch Ethergruppen -O- ersetzt sein können, wobei zwischen den einzelnen Ethergruppen ein Abstand von mindestens zwei Kohlenstoff-Kettengliedern besteht, wobei $R_1$ zusätzlich durch eine oder mehrere funktionelle Gruppen Y, die mindestens ein Stickstoff- oder Sauerstoffatom an Kohlenstoff gebunden enthalten, substituiert sein kann. Vorzugsweise steht Y für eine $-NR_2R_3$, $-OR_4$, $-COOR_5$ oder

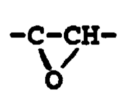

Gruppe, worin $R_2$ und $R_3$ unabhängig voneinander Alkyl mit 1 bis 4 Kohlenstoffatomen bedeuten oder worin $R_2$ und $R_3$ zusammen mit dem Stickstoff und gegebenenfalls weiteren Stickstoff- oder Sauerstoffatomen einen fünf- oder

sechsgliedrigen Ring bedeuten können und worin $R_4$ und $R_5$ Wasserstoff oder einen Alkyl- oder Cycloalkylrest mit 1 bis 40, insbesondere 1 - 10 Kohlenstoffatomen bedeuten.
Sofern Cycloalkylreste genannt werden, handelt es sich vorzugsweise um 5 bis 8-gliedrige Ringsysteme. Ferner kann die Komponente B) Monomere der Formel (II)

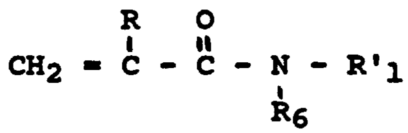 (II)

worin R'und $R'_1$ die Bedeutungen von R bzw. $R_1$ besitzen und $R_6$ für Wasserstoff steht oder die gleichen Bedeutungen wie $R_1$ besitzt, enthalten.

Besonders bevorzugt dient das erfindungsgemäße Verfahren zur Herstellung von Homo-Oligomeren gebildet aus der Monomerkomponente B), insbesondere (Meth)acrylsäureestern der Formel (I) (s. oben), speziell aus den Monomeren B') (s. unten), insbesondere B'-α. Weiter dient das erfindungsgemäße Verfahren vorteilhaft zur Herstellung von Cooligomeren CM", aufgebaut aus

A) 0 - 75 Gew.-%, vorzugsweise 10 bis 40 Gew.-% mindestens eines 1-Alkens mit 4 bis 32 Kohlenstoffatomen, vorzugsweise 10 bis 14 Kohlenstoffatomen im Molekül und

B'-α) 20 - 100 Gew.-%, vorzugsweise 40 bis 90 Gew.-% mindestens eines (Meth)acrylsäureesters der Formel I'

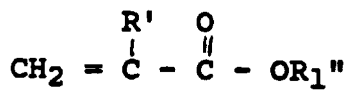 (I')

worin R' für Wasserstoff oder Methyl und $R_1$" für einen gegebenenfalls verzweigten Alkylrest oder einen Cycloalkylrest mit 4 bis 32 Kohlenstoffatomen, vorzugsweise 8 bis 20 Kohlenstoffatomen im Alkylrest steht sowie

B'-β) 0 - 65 Gew.-%, vorzugsweise 0,5 bis 50, insbesondere 3 - 40 Gew.-% eines (Meth)acrylsäureesters der Formel I"

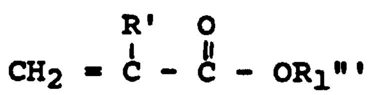 (II")

worin R' für Wasserstoff oder Methyl und $R_1$" für einen mit mindestens einer Gruppe Y', worin Y' die gleiche Bedeutung wie Y besitzt, insbesondere einer Hydroxylgruppe substituierten Alkylrest mit 2 bis 6 Kohlenstoffatomen oder für einen Rest

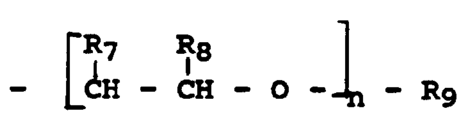

worin $R_7$ und $R_8$ Wasserstoff oder Methyl, $R_9$ Wasserstoff oder einen gegebenenfalls verzweigten Alkylrest mit 1 bis 40, vorzugsweise 1 bis 20 Kohlenstoffatomen und n eine ganze Zahl von 1 bis 60 bedeutet, mit der Maßgabe, daß, wenn n für 1 steht, $R_8$ gleichzeitig ausschließlich für einen gegebenenfalls verzweigten Alkylrest mit 1 bis 40 Kohlenstoffatomen steht.

In der Regel ergänzen sich auch hier die Komponenten A') und B') der Cooligomeren zu 100 Gew.-%. Beispielhaft seien als Vertreter der Monomerkomponente A) genannt:

Buten-1, Penten-1, Hexen-1, Hepten-1, Octen-1, Nonen-1, Decen-1, Undecen-1, Dodecen-1, Tridecen-1, Tetradecen-1, Pentadecen-1, Hexadecen-1, Heptadecen-1, Octadecen-1, Nonadecen-1, Eicosen-1, Heneicosen-1, Docosen-1, Trocosen-1, Tetracosen-1, Pentacosen-1, Hexacosen-1, Heptacosen-1, Octacosen-1, Nonacosen-1, Triaconten-1, Hentriaconten-1, oder Dotriaconten-1. Geeignet sind ferner verzweigt-kettige Alkene, wie beispielsweise Vinylcyclohexan, 3,3-Dimethylbuten-1, 3-Methylbuten-1, oder Diisobutylen-4-methylpenten-1.

Ferner eignen sich Alkene-1 mit 10 bis 32 Kohlenstoffatomen, die bei der Polymerisation von Äthylen, Propylen oder Mischungen davon anfallen, wobei diese Materialien ihrerseits aus hydrogecrackten Materialien gewonnen werden.

Besonders bevorzugt ist die Ausführungsart bei der die Komponente A) der Cooligomeren CM für 1-Decen oder für Dodecen, Tetradecen steht.
Weiter sind von besonderem Interesse Oligomere bzw. Cooligomere CM worin die Komponente B) aus (Meth)acrylsäureestern mit 4 - 22 Kohlenstoffatomen im (verzweigten oder unverzweigten) Alkylrest bzw. aus Gemischen derselben besteht.

Genannt seinen z.B. die Monomeren:

Butylacrylat, 2-Äthylhexylacrylat, Cyclohexylacrylat, Isodecylacrylat, Decylacrylat, Undecylacrylat, Dodecylacrylat, Tridecylacrylat, Tetradecylacrylat, Pentadecylacrylat, Hexadecylacrylat, Heptadecylacrylat, Octadecylacrylat, Cetylstearylacrylat, Oleylacrylat, Nonadecylacrylat, Eicosylacrylat, Cetyleicosylacrylat, Stearyleicosylacrylat, Docosylacrylat, Eicosyltetratriacontylacrylat bzw. die entsprechenden Methacrylate.
Hervorgehoben seien Alkylmethacrylate mit ≥ C10 im Alkylrest mit einem höheren Iso-Anteil. Erwähnt seien z.B. C12-C15-Alkylester der Methacrylsäure mit ca. 60 - 90 % Iso-Anteil sowie Isodecylmethacrylat.
Für bestimmte Anwendungszwecke sind auch Monomere gemäß Formel I, worin $R_1$ für C1-C3-Alkyl steht, insbesondere das Methylmethacrylat daneben das Ethylacrylat, das Ethylmethacrylat, das Propylacrylat und das Propylmethacrylat geeignet, wobei aber die niederen Siedepunkte für den Umsatz bei Normaldruck limitierend wirken.

Als Vertreter der Monomergruppe B) gemäß Formel (I) seien weiterhin die folgenden aminsubstituierten Alkylester der (Meth)acrylsäure genannt:
2-Diaminomethyl(meth)acrylat, 2-Diethylaminoethyl(meth)acrylat, 3-Dimethylamino-2,2-dimethylpropyl-l-(meth)acrylat, 3-Dimethylamino-2,2-dimethylpropyl-1-(meth)acrylat, 2-Morpholinoethyl(meth)-acrylat, 2-tert.-Butylaminoethyl (meth)acrylat, 3-(Dimethylamino)propyl(meth)acrylat, 2-(Dimethylaminoethoxy-ethyl)(meth)acrylat.

Ferner seien die folgenden oxy- bzw. alkoxysubstituierten Alkylester der (Meth)acrylsäure genannt:
2-Hydroxyethyl(meth)acrylat, 2-Hydroxypropyl(meth)acrylat, 2-Methoxyethyl(meth)acrylat, 2-Ethoxyethyl(meth)acrylat, 2-Butoxyethyl(meth)acrylat, 2-(2-Butoxyethoxy)ethylmethacrylat, 2-(Ethoxyethyloxy)ethyl(meth)acrylat, 4-Hydroxybutyl(meth)acrylat, 2-[2-(2-Ethoxyethoxy)ethoxy]ethyl(meth)acrylat, 3-Methoxybutyl-1-(meth)acrylat, 2-Alkoxy-methylethyl(meth)acrylat, 2-Hexoxyethyl(meth)acrylat.

Als Vertreter der Monomergruppe B) gemäß der Formel (II) seien Beispielsweise die folgenden (Meth)acrylamide genannt:
N-Methyl(meth)acrylamid, N-Dimethylamino(meth)acrylamid, N-Dimethylaminopropyl(meth)acrylamid, N-Isopropyl (meth)acrylamid, N-tert.Butyl(meth)acrylamid, N-Isobutylmethyl(meth)acrylamid, N-Decyl(meth)acrylamid, N-Cyclohexyl (meth) acrylamid, N-[3-(Dimethylamino)-2,2-dimethylpropyl]-methacrylamid, N-Dodecyl(meth)acrylamid, N-[3-Dimethylaminopropyl](meth)acrylamid, N-[2-Hydroxethyl](meth)acrylamid.

Für die Lösemittel L wie für die eingesetzten Monomeren gilt, daß sie unter den gewählten Reaktionsbedingungen stabil und inert sein sollen.
Im allgemeinen liegt der Siedepunkt, um Druckreaktionen zu vermeiden, oberhalb der gewählten Reaktionstemperatur. Derartige Lösungsmittel sind an sich bekannt.

Herstellung der Cooligomeren CM

Wie bereits ausgeführt ist es an sich bekannt unter bestimmten Voraussetzungen Oligomere bzw. Cooligomere aus den beiden Monomerklassen durch radikalinduzierte Polymerisation herzustellen, beispielsweise durch thermische Polymerisation und unter Zugabe eines geeigneten Initiators bzw. eines Redoxsystems (vgl. Stand der Technik). Das erfindungsgemäße Verfahren kann zur Herstellung teils neuer, teils der Comonomerenzusammensetzung nach bekannter Cooligomeren CM dienen. Das erfindungsgemäße Verfahren zeichnet sich durch größere Anwendungsbreite bei sehr guten Ergebnissen aus, setzt aber die Einhaltung bestimmter Verfahrensbedingungen voraus. Dabei wird die Monomerkomponente A) mit geringer Polymerisationstendenz und/oder das Lösemittel L in einem geeigneten Polymerisationsgefäß mit Thermometer, Heiz- und Rührvorrichtung auf Reaktionstemperatur erhitzt. Das Lösungsmittel L soll unter Reaktionsbedingungen stabil und inert sein. Zweckmäßig liegt der Siedepunkt oberhalb der gewählten Reaktionstemperatur. Als Beispiele seien aliphatische bzw. aromatische Kohlenwasserstoffe wie Xylol Cymol, Decan oder Dodecan genannt, oder auch Mineralöle, Polyalphaolefine, Ester sowie vorher hergestellte Oligomere eignen sich als Lösungsmittel.

Besonders zweckmäßig ist die Verwendung von Mineralölen, oder anderer nicht-Mineralöl-basierter Syntheseöl-Flüssigkeiten, wenn die Cooligomeren als Grundflüssigkeiten für Syntheseöle verwendet werden sollen (vgl. Ullmann's

Encyclopädie der Techn. Chemie, 4. Auflage, Bd. 20, S. 484 - 530, Verlag Chemie 1981), insbesondere der Typen, die später als Mischkomponente dienen sollen. In diesem Zusammenhang seien genannt: Polyalphaolefine verschiedener Viskositätsklassen, Hydrocracköle, verschiedene Esteröle wie z.B. TMA-OD-Ester sowie handelsübliche Mineralöle, z.B. der 100N oder 150N-Klasse.

Die Reaktionstemperatur wird laut Merkmal C) so gewählt, daß sie in einem Bereich liegt, in dem ein (reglerfrei hergestelltes) Homopolymer aus der besser polymerisierenden Monomerkomponente B) bereits merklich depolymerisiert. Eine "merkliche Depolymerisation" liegt in der Regel dann vor, wenn im (thermisch bedingten) Monomer-Polymer-Gleichgewicht bereits größere Anteile an Monomer vorliegen. Als Maßzahl sind 3 - 80 Gew.-% Monomer im Gleichgewicht angegeben worden. Allerdings ist die Bestimmung von Polymerisations-Depolymerisations-Gleichgewichten mit einem gewissen Aufwand verbunden. Für eine Reihe von Monomeren bzw. Temperaturbereichen liegen auch noch keine Literaturdaten vor.

Für eine grobe aber praktisch aussagekräftige Abschätzung des für das Verfahren in Frage kommenden Temperaturbereichs hat sich nun das sehr einfache Verfahren der Thermogravimetrie bewährt. Dabei wird ein herkömmlich hergestelltes Homopolymer der besser polymerisierenden Komponente B) unter Sauerstoff-Ausschluß bei steigender Temperatur thermogravimetrisch untersucht. Für erste Oligomerisierungsversuche sollte nun der Temperaturbereich ins Auge gefaßt werden, der 50°C unterhalb der Temperatur beginnt, wo die ersten Gewichtsverluste infolge Depolymerisation auftreten, und ca. 30°C oberhalb dieser Temperatur endet.

Weiter ist erfindungsgemäß von Belang die Auswahl und der Zugabemodus der Radikal-Initiatoren I: Die Initiatoren I sollen so gewählt sein, daß deren Halbwertszeit bei der jeweiligen Reaktionstemperatur im Bereich von ca. 1 Min. bis ca. 5 Stunden liegt. (Vgl. Kirk-Othmer, 3rd. Ed. Vol. 13, pg. 355 - 373, Interscience 1981; Brandrup-Immergut, Polymer Handbook loc.cit. II/1).

Die Zufuhr der Initiatoren geschieht über die ganze Polymerisationsdauer hinweg (mit Ausnahme der Nachpolymerisation, meist im Bereich von 1/2 - 1 Stunde). Gewöhnlich liegt die Reaktionsdauer im Bereich von ca. 10 und bis 15 Stunden, beispielsweise um 12 ± 1 Stunden. Davon entfällt in der Regel etwa 1/10 bis die Hälfte, beispielsweise 1 - 5,5 Stunden auf die Phase der Monomerzugabe. Die Zugabe der Initiatoren über die ganze Reaktionsdauer hinweg wird zweckmäßig entweder portionsweise in geeigneten Abständen, beispielsweise halbstündig, oder kontinuierlich, z.B. nach dem Modus eines Zulaufs, durchgeführt. Als Anhalt sei (auf je ein Mol der Monomeren A) bzw. B) bezogen) die Zugabe von je 0,001 - 0,005 mol Initiator pro Portion bei halbstündiger Zugabe angegeben. Die Initiatormenge wird insgesamt so bemessen, daß sie 0,1 bis ca. 10 Gew.-% bezogen auf die Gesamtheit der Monomeren beträgt. Als Initiatoren sind z.B. peroxidische Initiatoren anwendbar, soweit sie den oben dargelegten Kriterien entsprechen. Genannt seien Di-tert.-Butylperoxid tert.Butylperbenzoat oder tert.Butylperoctoat, um nur wenige Beispiele zu nennen.

Nach vorliegenden Ergebnissen kann erfindungsgemäß durch geeignete Wahl der Reaktionsbedingungen eine weitgehende Umsetzung der Monomeren beispielsweise um 98 % erreicht werden, so daß sich in vielen Fällen eine Abtrennung der Monomeren, ja selbst eine weitergehende Aufarbeitung erübrigt. In den übrigen Fällen besteht das Restmonomer fast ausschließlich aus Komponente A) die je nach Anwendungszweck abgetrennt wird. Die Produkte stellen i.a. farblose, ölige Flüssigkeiten dar, die sich vollständig mit Mineralöl, PAO, HC-Ölen und Esterölen mischen, wenn der Gehalt an B'- β gewisse Grenzen z.B. 50 Gew.-% nicht überschreitet.

Vorteilhafte Eigenschaften

Die Cooligomeren CM gemäß der vorliegenden Erfindung können - wie auch bereits im Stand der Technik vorgezeichnet - in verschiedenen Richtungen technische Anwendung finden. Sie eignen sich z.B. als wertvolle Bestandteile von Syntheseölen. Soweit sie funktionale Gruppen Y (beispielsweise nach Merkmal B'- β) besitzen, verleihen sie den Syntheseölen Dispergierwirksamkeit.

Darüber hinaus dienen sie als niedermolekulare Mineralöl-Additive, wobei wiederum solche mit dispergierenden Eigenschaften auf besonderes Interesse rechnen können. Weiter können Sie als Weichmacher für bestimmte Kunststoffe Verwendung finden.Vorteile sind u.a: geringe Migration, keine feststellbare Toxizität. Durch die Verwendung polarer/unpolarer Monomerer erreicht man eine sehr erwünschte Anwendungsbreite.

Die folgenden Beispiele dienen zur Erläuterung der Erfindung.

Dabei werden die physikalischen Daten anhand folgender Normen bestimmt:

| | |
|---|---|
| Viskosität: | η (100 Grad C) (nach DIN 51 562 bzw. ASTM D 445 im Ubbelohde-Kapillar-Viskosimeter) |
| : | VIB Errechnet aus der 40- und 100 Grad-Viskosität des Grundöls |
| Stockpunkt: | im Stockpunkt-Automaten nach DIN 51 583, |
| Molgewicht: | (durch Gelchromatographie gegen PMMA als Standard) |
| Uneinheitlichkeit: | U |
| Br-Zahl: | nach DIN 51 774 |
| Noack-Zahl: | nach DIN 51 581 |

Die verwendete Abkürzung "AMA" steht für Alkylmethacrylate, "PAO" steht für Polyalphaolefin, "TMA-OD-Ester" steht für den Ester von Trimethylolpropan mit Adipinsäure.

BEISPIELE

- Verfahrensbeispiele -

Beispiel 1

1 mol 1-Decen (140 g) wird im Reaktionsgefäß auf 160°C erhitzt. Ein Gemisch aus 0,5 mol Isodecylmethacrylat (113 g) und 0,5 mol C12-C15-Alkylmethacrylat mit 60 % Iso-Anteil (136 g) wird nun während 4 Stunden zulaufen gelassen. Nach Ende des Zulaufs wird noch 12 Stunden im Batch auspolymerisiert. Während der gesamten Reaktionszeit von hier 16 Stunden wird mit Ausnahme der letzten Stunde in 30-minütigen Abständen Di-tert-butylperoxid als Initiator zugegeben (hier 30 Portionen, Gesamtmenge 2,8 Gew.-% bezogen auf die Monomeren).
Nach Ende der Reaktion liegt der Umsatz der Monomeren bei ca. 98 %.
Das Produkt ist eine farblose, ölige Flüssigkeit, die vollständig mit Mineralölen, Poly-Olefinen oder Esterölen mischbar ist.

Stoffdaten:

$\eta$ (100°C = 45,1 $mm^2/s$,
$\eta$ (40°C) = 489,0 $mm^2/s$
VIB = 146
Stockpunkt - -43,2°C
$\bar{M}w$ = 4 000
$\bar{M}n$ = 1 790 U = 1,23
Verdampfungsverlust nach Noack 4 - 5 Gew.-%

Beispiel 2

Durchführung wie in Beispiel 1, aber Zulauf der Methacrylat-Mischung während 1,5 Stunden.
Stoffdaten:

$\eta$ (100°C) = 94,9 $mm^2/s$,
$\eta$ (40°C) = 1 210,8 $mm^2/s$,
VIB = 164
Stockpunkt = -33,6°C
$\bar{M}w$ = 8 330
$\bar{M}n$ = 2 280
U = 2,65
Monomer-Umsatz = 95 %

Beispiel 3

Wie Beispiel 1, Reaktionstemperatur aber 140°C, verwendeter Initiator: tert.-Butylperbenzoat
Stoffdaten:

$\eta$ (100°C) = 87,8 $mm^2/s$
$\eta$ (40°C) = 1 188,3 $mm^2/s$
VIB=154
Stockpunkt = -34,7°C
$\bar{M}w$ = 6 890
$\bar{M}n$ = 2 240
U = 2,00
Monomer-Umsatz = 97 %.

Beispiel 4

2 mol 1-Decen (280 g) werden im Reaktionsgefäß auf 160°C erhitzt. 1 mol Isodecylmethacylat (227 g) wird bei

dieser Temperatur während 5 Stunden zulaufen gelassen. Nach Ende des Zulaufs wird noch 6 Stunden im Batch nachpolymerisiert. Während der gesamten Reaktionszeit von 11 Stunden wird mit Ausnahme der letzten Stunde in 30-minütigen Abständigen Di-tert-butylperoxid als Initiator zugegeben (hier 20 Portionen insgesamt 4,3 Gew.-% bez. auf die Monomeren).
Nach Ende der Reaktion liegt der Umsatz der Monomeren bei ca. 92 %.

Stoffdaten:

$\eta$ (100°C) = 25,9 $mm^2/s$
$\eta$ (40°C) = 250,3 $mm^2/s$
VIB = 134
Stockpunkt = -48,4°C
$\overline{M}w$ = 2 240
$\overline{M}n$ = 1 370
U = 0,64

Beispiel 5

Wie Beispiel 4, aber Isodecylmethacrylat/Decen 1 : 1 mol, Gesamt-Initiator-Menge 2,8 Gew.-%.

Stoffdaten:

$\eta$ (100°C) = 47,6 $mm^2/s$
$\eta$ (40°C) = 603,8 $mm^2/s$
VIB = 132
Stockpunkt = -38,9°C
$\overline{M}w$ = 3120
$\overline{M}n$ = 1 610
U = 0,94

Beispiel 6

Wie Beispiel 4, aber Isodecylmethacrylat/Decen im Verhältnis 1 : 0,25 mol-Verhältnis, Gesamt-Initiator-Menge 2,8 Gew.-%

Stoffdaten:

$\eta$ (100°C) = 424,6 $mm^2/s$
$\eta$ (40°C) = 1 219,7 $mm^2/s$
VIB = 170
Stockpunkt = -10,7°C
$\overline{M}w$ = 12 300
$\overline{M}n$ = 2 890
U = 3,26
Monomer-Umsatz = 98 %

Beispiel 7

Wie Beispiel 6, aber Zulauf des Isodecylmethacrylats während 2,5 Stunden, Gesamt-Initiatormenge : 2,8 Gew.-%

Stoffdaten:

$\eta$ (100°C) = 888,2 $mm^2/s$
$\eta$ (40°C) = 27162 $mm^2/s$
VIB = 206
Stockpunkt: (zu viskos)
$\overline{M}w$ = 24 800
$\overline{M}n$ = 3 480
U = 6,12
Monomer-Umsatz > 99 %

Beispiel 8

Wie Beispiel 5, aber Reaktionstemperatur 140°C, Initiator: tert.-Butylperbenzoat 4,8 Gew.-%.
Stoffdaten:

$\eta$ = (100°C) = 130,7 $mm^2/s$
$\eta$ = (40°C) = 2 335,1 $mm^2/s$
VIB = 147
Stockpunkt = -25,9°C
$\overline{M}w$ = 6 690
$\overline{M}n$ = 2 200
U = 2,04
Monomer-Umsatz = 96 %

Beispiel 9

Wie Beispiel 5, aber Reaktionstemperatur 126°C, Initiator: tert.Butylpernonoat 4,8 Gew.-%.
Stoffdaten:

$\eta$ (100°C) = 460,1 $mm^2/s$
$\eta$ (40°C) = 12321,7 $mm^2/s$
VIB = 180
Stockpunkt = -8,5°C
$\overline{M}w$ = 11 800
$\overline{M}n$ = 2 560
U = 2,31
Monomer-Umsatz = 88 %

Beispiel 10

Durchführung wie Beispiel 4, aber zusätzlich zu 1 mol 1-Decen in der Vorlage noch 280 g nach Beispiel 4 hergestelltes Syntheseöl als Lösungsmittel verwendet.
Stoffdaten:

$\eta$ (100°C) = 28,0 $mm^2/s$
$\eta$ (40°C) = 294,0 $mm^2/s$
VIB = 127
Stockpunkt = -44,5°C
$\overline{M}w$ = 2 180
$\overline{M}n$ = 1 350
U = 0,61
Monomer-Umsatz = 98 %

Beispiel 11

Wie Beispiel 1, Methacrylat-Komponente ist aber Butylmethacrylat, Zulaufzeit 3,5 Stunden.
Stoffdaten:

$\eta$ (100°C) = 1 480 $mm^2/s$
$\eta$ (40°C) = 2 836,2 $mm^2/s$
VIB = 147
Stockpunkt: -26°C
$\overline{M}w$ = 6 500
$\overline{M}n$ = 1 860
U = 2,51
Monomer-Umsatz = 91. %

Beispiel 12

3 mol Dodecan (523 g) werden im Reaktionsgefäß auf 160°C erhitzt, 1 mol C12-C15-Alkylmethacrylat mit 90 % Iso-Anteil (272 g) wird während 5,5 Stunden umlaufen gelassen. Nach Ende des Zulaufs wird noch 11 Stunden im Batch nachpolymerisiert. Die Initiator-Zugabe erfolgt wie in Beispiel 1 beschrieben. Nach der Reaktion wird das Lösungsmittel destillativ entfernt. Das erhaltene Produkt ist eine farblose, ölige Flüssigkeit, die vollständig mit Mineralölen, PAO oder Esterölen mischbar ist.

Stoffdaten:

η (100°C) = 16,7 $mm^2/s$,
η (40°C) = 128,1 $mm^2/s$
VIB = 141
Stockpunkt < -52,1°C
$\overline{M}w$ = 1 510
$\overline{M}n$ = 1 230
U = 0,23
Verdampfungsverlust nach Noack = 6 %
Monomer-Umsatz = 95 %

Beispiel 13

Wie Beispiel 12, aber statt Dodecan die gleiche Gewichtsmenge Hydrocrack-Öl als Lösungsmittel.

Stoffdaten Hydrocrack-Öl:

η (100°C) = 3,62 $mm^2/s$
VIB = 126
Stockpunkt = -33,0°C

Stoffdaten der erhaltenen Oligomer/Öl-Mischung:

η (100°C) = 5,08 $mm^2/s$
η (40°C) = 24,1 $mm^2/s$
VIB = 144
Stockpunkt = -34,5°C

Beispiel 14

400 g (0,28 mol) C1* werden in 450 g (1,99 mol) Isodecylmethacrylat gelöst. 250 g (1,78 mol) 1-Decen werden im Reaktionsgefäß auf 140 °C erhitzt. Während 1,5 Stunden wird das Methacrylat-Gemisch zulaufen gelassen. Nach Ende des Zulaufs wird noch 15 Stunden im Batch nachpolymerisiert. Die Initiator-Zugabe erfolgt wie in Beispiel 1 beschrieben. Der Initiator ist tert-Butylperbenzoat, Gesamtmenge ~ 3 Gew.-%. Das erhaltene Produkt ist ein gelbliches Öl, das Mineralöl-löslich ist.

* C1 ist der Methacrylsäureester eines ethoxylierten C16 -C18-Fettalkoholgemisches, mittlerer Ethoxylierungsgrad 25, hier ist der Alkohol Marlipal 1618/25®, Produkt der Hüls AG angewendet worden.

Stoffdaten:

η (100°C) = 1 006 $mm^2/s$
η (40°C) = 15 756 $mm^2/s$
VIB = 276
Stockpunkt: (zu viskos)
$\overline{M}w$, $\overline{M}n$ = über GPC wegen starker Adsorption nicht bestimmbar.
Ausbeute: > 98 %

Beispiel 15

300 g (0,37 mol) Komponente C2** wird in 400 g (1,77 mol) Isodecylmethacrylat gelöst. 300 g (2,14 mol) 1-Decen wird im Reaktionsgefäß auf 160°C erhitzt. Die Methacrylatmischung wird während 2 Stunden zulaufen gelassen. Gesamtreaktionszeit 16,5 Stunden, Initiator-Zugabe wie in Beispiel 1. Initiator: Di-tert.-butylperoxid, Gesamtmenge ~ 3

Gew.-%. Das Produkt ist Mineralöl-löslich.

** C2 ist der Methacrylsäureester von Methoxypolyethylenglykol mittlerer Ethoxylierungsgrad 16; hier wurde der Alkohol Carbowax 750® (Trademark der Union Carbide) verwendet.

Stoffdaten:

η (100°C) = 293,4 $mm^2/s$
η (40°C) = 3 999,0 $mm^2/s$
VIB = 217
Stockpunkt = -22,1°C
$\overline{M}w$, $\overline{M}n$ über GPC wegen starker Adsorption nicht bestimmbar Umsatz annähernd 100 %

Beispiel 16

Wie Beispiel 5, aber statt Isodecylmethacrylat C12-C15-Alkylmethacrylat mit 90 % Iso-Anteil

Stoffdaten:

η (100°C) = 41,8 $mm^2/s$
η (40°C) = 417,6 $mm^2/s$
VIB 152
Stockpunkt = -44,1°C
$\overline{M}w$ = 3 430
$\overline{M}w$ = 1 830
U = 0,78

Beispiel 17

Wie Beispiel 1, Methacrylatkomponente aber C12-C15-Alkylmethacrylat (90 % iso), AMA/Decen-Verhältnis: 1 : 0,5 mol, 1 Stunde AMA-Zulauf.

Stoffdaten:

η (100°C) = 234,4 $mm^2/s$
η (40°C) = 4 810,6 $mm^2/s$
VIB = 165
Stockpunkt = -25,6°C
$\overline{M}w$ = 23 100
$\overline{M}n$ = 3 230
U = 6,14

Anwendungstechnische Beispiele

Beispiel 18

Vergleich einer Oligomer/Esteröl-Mischung mit einer Poly-α -Olefin/Esteröl-Mischung in den Viskositätsdaten

| | 20 % PAO 100 in TMA-OD®-Ester | 20 % Oligomer aus Beispiel 17 in TMA-OD®-Ester |
|---|---|---|
| η (100°C) | 6,68 $mm^2/s$ | 7,70 $mm^2/s$ |
| VIB | 193 | 212 |
| CCS (-30°C) | 1 800 mPa s | 1 600 mPa s |

Deutlich erkennbar ist, daß mit dem Cooligomeren in der Mischung trotz höherer Viskosität bei 100 Grad C eine niedrigere Viskosität bei -30°C und damit ein besseres Tieftemperatur-Verhalten erreichbar ist.

Beispiel 19

Vergleich einer Oligomer/PAO-Formulierung mit einer PAO6/PAO40-Formulierung im VW-TD-Motortest

| | PAO40 in PAO 6 | Oligomer aus Beispiel 18 in PAO6 |
|---|---|---|
| Formulierung | 45 % PAO 40 14,2 % handelsübliches DI-Paket 40,8 % PAO6 | 45 % Oligomer 14,2 % handelsübliches DI-Paket 40,8 PAO6 |
| η (100°C) | 19,5 $mm^2/s$ | 18,7 $mm^2/s$ |
| VI | 147 | 148 |
| SAE-Klasse | 10W-50 | 10W-50 |
| VW-TD-Ergebnis | 63,7 Punkte, alle | 67,2 Punkte, alle |
| Ringe frei | Ringe frei | |

Mit der Oligomer/PAO-Mischung ist demnach eine hervorragende Dieselbewertung zu erzielen, was für sehr gute thermisch-oxidative Stabilität spricht. Zu berücksichtigen ist weiterhin, daß die zum Vergleich herangezogene reine Polyalphaolefin-Formulierung bekanntermaßen sehr gute Diesel-Performance aufweist.

## Patentansprüche

1. Verfahren zur Herstellung von Oligomeren und Cooligomeren durch radikalische Polymerisation von mindestens einer Monomerkomponente B) mit höherer Polymerisationstendenz und 0 - 90 Gew.-% bezogen auf die Oligomeren einer Monomerkomponente A) mit niederer Polymerisationstendenz bei erhöhter Temperatur und in Anwesenheit von Polymerisationsinitiatoren in einem üblichen Polymerisationsgefäß,
   dadurch gekennzeichnet,
   daß die Q-Werte nach Alfrey-Price der Monomeren A) mit niederer Polymerisationstendenz und der Monomeren B) mit höherer Polymerisationstendenz um einen Faktor ≥ 5 voneinander verschieden sind, und daß man

   a) in dem Polymerisationsgefäß eine flüssige Phase aus der Monomerkomponente A) oder einem Lösungsmittel L oder beiden vorlegt und diese auf die Reaktionstemperatur bringt,

   b) die Komponente B) mit höherer Polymerisationstendenz zugibt, sofern die Komponente A) vorliegt, in der Weise, daß das Molverhältnis der Komponente B) zur Komponente A) in der Anfangsphase der Polymerisation Werte von 0 bis ca. 0,2 durchläuft und in der Endphase der Polymerisation den Wert 0,2 bis 20 annimmt, mit der Maßgabe, daß

   c) die Reaktionstemperatur so gewählt wird, daß sie in einem Bereich liegt, in dem ein Homopolymer aus der besser polymerisierenden Monoerkomponente B) bereits in dem Maße depolymerisiert, daß unter Monomer-Polymer-Gleich Gewichts-Bedingungen 3 - 80 Gew.-% an Monomeren (bezogen auf die Summe Monomer plus Polymer) registriert werden.

   d) der Initiator I über die gesamte Polymerisationsdauer hinweg zugeführt wird, wobei der Initiator I so gewählt wird, daß die Halbwertzeiten bei der entsprechenden Reaktionstemperatur 1 Minute bis ca. 5 Stunden betragen und die Initiatormengen 0,1 bis 10 Gew.-% bezogen auf die Gesamtheit der Monomeren betragen.

## Claims

1. A process for preparing oligomers and cooligomers by means of radical polymerisation of at least one monomer component B) with a higher polymerisation tendency and 0 - 90 wt.% based on the oligomers of a monomer component A) with a lower polymerisation tendency, at an elevated temperature and in the presence of polymerisation initiators using a conventional polymerisation vessel, characterised in that
   the Q-values, according to Alfrey Price, of the monomers A) with the lower polymerisation tendency and of the monomers B) with the higher polymerisation tendency differ from one another by a factor ≥ 5 and that

   a) a liquid phase comprising the monomer component A) or a solvent L or both is introduced to a polymerisation vessel, and is heated to the reaction temperature,

   b) the component B) with the higher polymerisation tendency is added, provided the component A) has been

introduced, so that the molar ratio of the component B) to component A), passes through values of 0 to about 0.2 in the initial phase of polymerisation and reaches the value 0.2 to 20 in the final phase of polymerisation with the proviso that

c) the reaction temperature is chosen within a range in which a homopolymer of the more easily polymerisable monomer component B) depolymerises to such an extent that 3 - 80 wt.% of monomers (based on the sum of monomers plus polymer) are recorded under monomer/polymer equilibrium conditions.

d) the initiator I is added throughout the entire polymerisation, initiator I being chosen such that the half-life periods at the relevant reaction temperature are 1 minute to about 5 hours, and the initiator amounts are 0.1 to 10 wt.% based on the total amount of monomers.

## Revendications

**1.** Procédé de préparation d'oligoméres et de cooligomères par polymérisation radicalaire d'au moins un composant monomère B) ayant une plus forte tendance à la polymérisation et de 0 à 90% en poids, par rapport à l'oligomère, d'un composant monomère A) ayant une moindre tendance à la polymérisation, à température élevée et en présence d'amorceurs de polymérisation dans un réacteur de polymérisation usuel,

caractérisé en ce que les valeurs Q d'Alfrey-Price des monomères A) ayant une moindre tendance à la polymérisation et des monomères B) ayant une plus forte tendance à la polymérisation sont différentes l'une de l'autre d'un facteur ≥ 5, et en ce que

a) l'on introduit au préalable, dans le réacteur de polymérisation, une phase liquide du composant monomère A) ou d'un solvant L ou des deux, et on la porte à la température de polymérisation,
b) on ajoute le composant B) ayant une plus forte tendance à la polymérisation, au cas où le composant A) existe, de telle manière que le rapport molaire du composant B) au composant A) passe, dans la phase initiale de la polymérisation, des valeurs 0 à 0,2 environ et qu'il prenne, dans la phase finale de la polymérisation, une valeur de 0,2 à 20, étant spécifié que
c) la température de réaction est choisie de sorte qu'elle se situe dans une gamme dans laquelle un homopolymère du composant monomère B) qui polymérise mieux se dépolymérise déjà dans la mesure où, dans des conditions d'équilibre monomère-polymère, 3 à 80% en poids de monomères (par rapport à la somme monomère + polymère) sont enregistrés,
d) l'amorceur I est introduit pendant toute la durée de la polymérisation, l'amorceur I étant choisi de sorte que les temps de demi-réaction à la température de réaction correspondante se situent entre 1 min et 5 h environ, et les quantités d'amorceur s'élevant à 0,1-10% en poids par rapport à la totalité des monomères.